(19) Europäisches Patentamt European Patent Office Office européen des brevets

(11) EP 4 530 943 A1

(12) EUROPEAN PATENT APPLICATION

(43) Date of publication:
02.04.2025 Bulletin 2025/14

(21) Application number: 23200196.6

(22) Date of filing: 27.09.2023

(51) International Patent Classification (IPC):
G06Q 10/04 (2023.01)          G06N 20/00 (2019.01)
G06V 10/70 (2022.01)

(52) Cooperative Patent Classification (CPC):
G06Q 10/04; G06N 20/00; G06V 10/25;
G06V 20/52; G06V 40/103

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Robert Bosch GmbH
70442 Stuttgart (DE)

(72) Inventors:
• Sakmann, Kaspar
70469 Stuttgart (DE)
• Timans, Alexander
1017 GP Amsterdam (NL)
• Nalisnick, Eric
1086 ZR Amsterdam (NL)
• Straehle, Christoph-Nikolas
71263 Weil Der Stadt (DE)

Remarks:
Amended claims in accordance with Rule 137(2)
EPC.

(54) **DEVICE AND COMPUTER-IMPLEMENTED METHODS FOR DETERMINING A MULTI-DIMENSIONAL QUANTITY, FOR OPERATING A TECHNICAL SYSTEM, AND FOR PROVIDING A QUANTITY PREDICTION SYSTEM**

(57) Device and computer-implemented methods for determining a multi-dimensional quantity that characterizes an object in an environment of a technical system, or a technical system, for operating a technical system, and for providing a quantity prediction system, wherein the method for determining the multi-dimensional quantity comprises providing (302) at least one quantity that characterizes the technical system, or an environment of the technical system, predicting (304), depending on the at least one quantity, a first prediction of the multi-dimensional quantity, providing (308) a multi-dimensional parameter that defines a prediction interval, determining (310) a second prediction of the multi-dimensional quantity depending on the first prediction of the multi-dimensional quantity and the multi-dimensional parameter, wherein the second multi-dimensional prediction determines the multi-dimensional quantity, wherein providing (308) the multi-dimensional parameter, comprises providing a plurality of pairs of a prediction of the multi-dimensional quantity and a reference for the multi-dimensional quantity, providing a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair at least in the dimension that the score is associated with, wherein the plurality of scores comprises sets of scores, wherein the scores in the set of scores are associated with the same dimension, determining, depending on the magnitude of the scores in the plurality of scores, a plurality of ranks for the scores that are associated with a dimension of the multi-dimensional quantity and a pair of the plurality of pairs respectively, selecting a rank of a set of ranks, wherein the set of ranks comprises ranks, in particular the largest ranks, that are associated in the plurality of ranks to different dimensions of the multidimensional quantity, selecting a score of the set of scores depending on the selected rank, and determining a value of the multi-dimensional parameter in the same dimension depending on the selected score

Fig. 4

**Description**

Background

The invention relates to a device and computer-implemented methods for determining a multi-dimensional quantity, for operating a technical system, and for providing a quantity prediction system.

Disclosure of the invention

A computer-implemented method for determining a multi-dimensional quantity that characterizes an object in an environment of a technical system , or a technical system comprises providing at least one quantity that characterizes the technical system, or an environment of the technical system, predicting, depending on the at least one quantity, a first prediction of the multi-dimensional quantity, providing a multi-dimensional parameter that defines a prediction interval, determining a second prediction of the multi-dimensional quantity depending on the first prediction of the multi-dimensional quantity and the multi-dimensional parameter, wherein the second multi-dimensional prediction determines the multi-dimensional quantity, wherein providing the multi-dimensional parameter, comprises providing a plurality of pairs of a prediction of the multi-dimensional quantity and a reference for the multi-dimensional quantity, providing a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair at least in the dimension that the score is associated with, wherein the plurality of scores comprises sets of scores, wherein the scores in the set of scores are associated with the same dimension, determining, depending on the magnitude of the scores in the plurality of scores, a plurality of ranks for the scores that are associated with a dimension of the multi-dimensional quantity and a pair of the plurality of pairs respectively, selecting a rank of a set of ranks, wherein the set of ranks comprises ranks, in particular the largest ranks, that are associated in the plurality of ranks to different dimensions of the multidimensional quantity, selecting a score of the set of scores depending on the selected rank, and determining a value of the multi-dimensional parameter in the same dimension depending on the selected score. The first prediction of the multi-dimensional quantity is changed by the multi-dimensional parameter that defines the prediction interval. The second prediction of the multi-dimensional quantity delimits the prediction interval containing the true multi-dimensional quantity. The ranks take into account correlation information between dimensions of the multi-dimensional quantity.

The selecting the rank may comprises determining a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected. The predetermined quantile defines the guarantee that is established. Therefore, the method provides a guarantee corresponding to the predetermined quantile. The scores provide a measure of the uncertainty associated with the prediction of the multi-dimensional quantity.

The method may comprise determining for the plurality of pairs a respective distance between the predicted multi-dimensional quantity and the reference multi-dimensional quantity in a pair, and determining the scores depending on the respective distances.

Determining the second prediction of the multi-dimensional quantity may comprise determining a value in a dimension of the second prediction of the multi-dimensional quantity, wherein determining the value in the dimension of the second prediction of the multi-dimensional quantity comprises adding or subtracting a value of the parameter in the dimension to the value in a dimension of the first prediction of the multi-dimensional quantity that corresponds to the dimension of the parameter and the second prediction of the multi-dimensional quantity.

According to an example, the multi-dimensional quantity and the reference for the multi-dimensional quantity characterizes the object in the environment of the technical system, or the technical system, in particular a physical quantity, or a wear, or an expected lifetime of the technical system.

A computer-implemented method for operating a technical system, in particular a computer-controlled machine, preferably a robot, a vehicle, a domestic appliance, a power tool, a manufacturing machine, a personal assistant, an access control system, or a system for conveying information, in particular a surveillance system, or a medical imaging system, comprises determining a multi-dimensional quantity that characterizes a technical system, in particular that characterizes a physical quantity, or a wear, or an expected lifetime of the technical system, with the method according to one of the previous claims, and operating the technical system depending on the multi-dimensional quantity determined by the second multi-dimensional prediction, in particular granting access, conveying information about the system, or conveying information about the multi-dimensional quantity, or stopping, or operating the technical system in a safe mode upon detecting that the multi-dimensional quantity is within, or outside of a predetermined tolerance, or moving at least a part of the technical system depending on the multi-dimensional quantity. The method operates the technical system taking into account the correlation information between dimensions and in particular with the guarantee that is established based on the predetermined quantile.

The method for operating the technical system may comprise determining the value in the dimension of the first prediction of the multi-dimensional quantity and adding the value of the parameter in the dimension that corresponds to the dimension of the second multi-dimensional prediction to the value in the dimension of the first prediction of the multi-dimensional quantity that corresponds to the dimension to define a first boundary and/or subtracting the parameter from the value in the dimension of the first multi-dimensional prediction to define a second boundary, and operating the at least a part of the technical system within the first boundary, within the second boundary or within both boundaries.

A computer-implemented method for providing an quantity prediction system for predicting a multi-dimensional quantity that characterizes an object in an environment of a technical system, or a technical system, in particular that characterizes a physical quantity, or a wear, or an expected lifetime of the technical system, may comprise providing a plurality of pairs of a prediction of the multi-dimensional quantity and a reference for the multi-dimensional quantity, providing a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair at least in the dimension that the score is associated with, wherein the plurality of scores comprises sets of scores, wherein the scores in the set of scores are associated with the same dimension, determining , depending on the magnitude of the scores in the plurality of scores, a plurality of ranks for the scores that are associated with a dimension of the multi-dimensional quantity and a pair of the plurality of pairs respectively, selecting a rank of a set of ranks, wherein the set of ranks comprises ranks, in particular the largest ranks, that are associated in the plurality of ranks to different dimensions of the multidimensional quantity, selecting a score of the set of scores depending on the selected rank, and determining a value of a multi-dimensional parameter that defines a prediction interval of the quantity prediction system in the same dimension depending on the selected score, and providing the quantity prediction system with the multi-dimensional parameter. The provided quantity prediction system takes into account the correlation information between dimensions and in particular provides the guarantee that is established based on the predetermined quantile.

In the method for providing the quantity prediction system, selecting the rank may comprise determining a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected.

The method for providing the quantity prediction system may comprise determining for the plurality of pairs a respective distance between the predicted multi-dimensional quantity and the reference multi-dimensional quantity in a pair, and determining the scores depending on the respective distances.

A device comprises at least one processor and at least one memory, wherein the at least one processor is configured to execute instructions that, when executed by the at least one processor, cause the device to perform the method for determining a multi-dimensional quantity, for operating a technical system, or for providing a quantity prediction system, wherein the at least one memory is configured to store the instructions.

Computer program, characterized in that the computer program comprises computer-readable instructions that, when executed by a computer, cause the computer to execute the method for determining a multi-dimensional quantity, for operating a technical system, or for providing a quantity prediction system.

Further advantageous embodiments are derived from the following description and the drawing. In the drawing:

Fig. 1    schematically depicts a device,
Fig. 2    depicts a flow chart comprising steps of a method for providing a quantity prediction system,
Fig. 3    depicts a flow chart comprising steps of a method for determining a multi-dimensional quantity,
Fig. 4    schematically depicts a result of determining the multi-dimensional quantity,
Fig. 5    depicts a flow chart comprising steps of a method for operating a technical system.

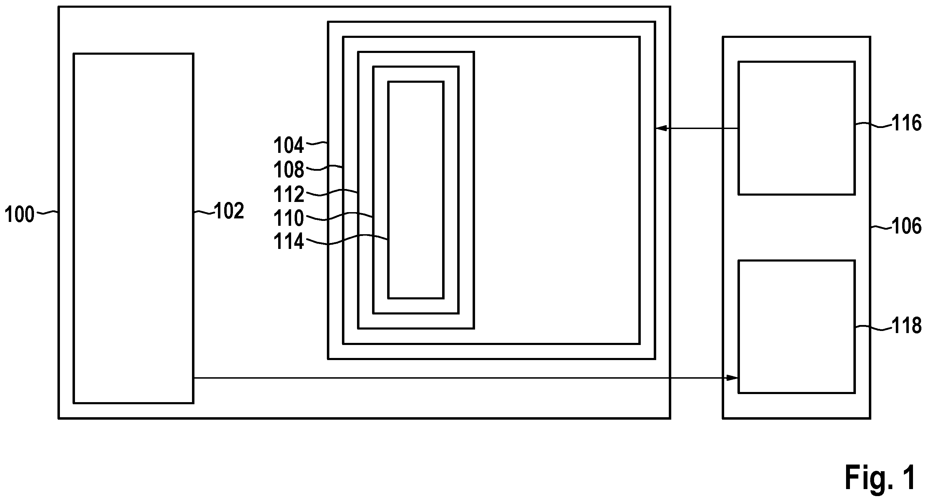

Figure 1 schematically depicts a device 100. The device 100 comprises at least one processor 102 and at least one memory 104.

According to an exemplary embodiment of the device 100, the device 100 is configured to operate a technical system 106. The technical system 106 is a physical system.

According to an exemplary embodiment of the device 100, the device 100 is configured to capture at least one quantity that characterizes the technical system 106, or an environment of the technical system 106, in particular a digital image 108, or to read at least one quantity that characterizes the technical system 106, or an environment of the technical system 106, in particular a digital image 108, from the at least one memory 104. According to an example, the at least one quantity characterizes a physical quantity that influences a wear, or an expected lifetime of the technical system 106. According to the example, the digital image 108 comprises pixels.

The technical system 106 may be a computer-controlled machine, preferably a robot, a vehicle, a domestic appliance, a power tool, a manufacturing machine, a personal assistant, an access control system, or a system for conveying information, in particular a surveillance system, or a medical imaging system.

According to an example, the device 100 comprises a sensor 116. The sensor 116 may be configured to capture the at least one quantity that characterizes the technical system 106, or the environment of the technical system 106. The sensor 116 may be a, a camera, a radar sensor, a LiDAR sensor, a thermal imaging sensor, an ultrasound sensor, an infrared sensor, or a motion sensor. The sensor 116 is in the example configured to capture the digital image 108.

According to an example, the device 100 comprises an actuator 118 that is configured to move the technical system 106 or a part of the technical system 106 or to stop moving the technical system 106 or a part of the technical system 106 or to operate the technical system 106 in a safe mode upon detecting that the multi-dimensional quantity, in particular the location, is within, or outside of a predetermined area.

According to an example, the device 100 is configured for determining the multi-dimensional quantity depending on the at least one quantity that characterizes the technical system 106, or the environment of the technical system 106.

According to an example, the device 100 is configured for determining the location of the object depending on the digital image 108. According to an example, the device 100 is configured for providing a quantity prediction system that is capable of detecting the multi-dimensional quantity, in particular the location of the object, depending on the at least on the at least one quantity that characterizes the technical system 106, or the environment of the technical system 106, in particular the digital image 108. According to an example, the device 100 is configured to operate the technical system 106 with the quantity prediction system depending on the multi-dimensional quantity determined by the quantity prediction system, in particular depending on the location of the object determined by the object detection system.

The device 100 may be configured to operate the technical system 106 to grant access, to convey information about the object, or to convey information about the multi-dimensional quantity, in particular the location.

The device 100 may be configured to move at least a part of the technical system 106 depending on the multi-dimensional quantity, in particular to the location or to avoid the location of the object.

The at least one processor 102 may be configured to execute instructions that, when executed by the at least one processor 102, cause the device 100 to perform a method for providing the quantity prediction system, or a method for determining the multi-dimensional quantity, in particular the location of the object, or a method for operating the technical system 106.

The at least one memory 104 is configured to store the instructions.

The multi-dimensional quantity characterizes for example an object in an, in particular real world, environment of the technical system 106, a physical quantity, or a wear, or an expected lifetime of the technical system 106.

An example, for a multi-dimensional quantity that characterizes the object in an environment of the technical system 106 is a bounding box.

The device 100 is for example configured to predict a first bounding box 110 that identifies a first set of pixels of the digital image 108. The device 100 is configured to predict the first bounding box 110 depending on the pixels of the digital image 108.

The device 100 is for example configured to predict a second bounding box 112 that identifies a second set of pixels of the digital image 108. The device 100 is configured to predict the second bounding box 112 depending on the first bounding box 110.

The second bounding box 112 defines a prediction interval for the location of the object. The second bounding box 112 defines the location of the object.

The device 100 may be configured to predict a third bounding box 114 that identifies a third set of pixels of the digital image. The device 100 may be configured to predict the third bounding box 114 depending on the first bounding box 110. The third bounding box 114 defines the prediction interval for the location of the object. The third bounding box 114 defines the location of the object.

Preferably, the second bounding box 112 defines one endpoint of the prediction interval, the third bounding box 114 defines one endpoint of the prediction interval. The location of the object may be defined to be in the prediction interval or at one of the endpoints.

At least one dimension of the second bounding box 112 and/or the third bounding box 114 may be larger than the corresponding dimension of the first bounding box 110. At least one dimension of the second bounding box 112 and/or the third bounding box 114 may be smaller than the corresponding dimension of the first bounding box 110. The second bounding box 112 and/or the third bounding box 114 may overlap with the first bounding box 112. The first bounding box 110 may contain the second bounding box 112 and/or the third bounding box 114. The second bounding box 112 and/or the third bounding box 114 may contain the first bounding box 110. The second bounding box 112 may contain the third bounding box 114. The third bounding box 114 may contain the second bounding box 112. The third bounding box 114 may overlap with the second bounding box 112. At least one dimension of the third bounding box 114 may be larger than the second bounding box 112. At least one dimension of the third bounding box 114 may be smaller than the second bounding box 112.

The bounding boxes in the example have a rectangular shape. Other shapes may be used, e.g., oval or circular. The bounding boxes in the example have a width and a height. According to the example, two-dimensional coordinates define a location of a pixel in the digital image. According to the example, the pixel coordinates of a lower left pixel and an upper right pixel of a respective bounding box defines the location of the respective bounding box. The set of pixels that a bounding box identifies, are the pixels that are, according to their coordinates, within the location of the respective bounding box.

The two-dimensional coordinates of the lower left pixel and the upper right pixel comprise a value for a first dimension of the two-dimensional coordinates and a value for a second dimension of the two-dimensional coordinates. The device 100 is for example configured to determine the value for the first dimension of the lower left pixel for the second bounding box 112 and/or the third bounding box 114 depending on the value of the first dimension for the lower left pixel of the first bounding box. The device 100 is for example configured to determine the value for the first dimension of the upper right pixel for the second bounding box 112 and/or the third bounding box 114 depending on the value of the first dimension for the upper right pixel of the first bounding box.

The device 100 is for example configured to determine the value of the second dimension for the lower left pixel or the upper right pixel of the second bounding box 112 and/or the third bounding box 114 as described for the respective value of first dimension. The device 100 is for example configured to determine the value of the second dimension for the second bounding box 112 and/or the third bounding box 114 as described for the value of first dimension.

The bounding boxes may be defined by other means, e.g., by the coordinates of different corners or coordinates of one corner and a length or direction of a diagonal or the length of two sides starting at the corner. The bounding boxes of circular shape may be defined by the coordinates of a center of the circle and a value of a radius or diameter of the circle. The bounding boxes of oval shape may be defined by the coordinates of a center of the oval and a value of a length of a semi-major axis and a semi-minor axis.

According to an example, the device 100 is configured to add a value of a dimension of a multi-dimensional parameter to the respective value for the first bounding box 110 in order to determine the corresponding value for the second bounding box 112. According to an example, the device 100 is configured to subtract a value of a dimension of a multi-dimensional parameter from the respective value for the first bounding box 110 in order to determine the corresponding value for the third bounding box 114.

This means, the multi-dimensional parameter defines the prediction interval.

The bounding boxes may be defined by three-dimensional values, i.e., the two-dimensional values and a value for a depth of the respective bounding box.

The device 100 may be configured to multiply the respective value with the multi-dimensional parameter or to divide the respective value by the multi-dimensional parameter in order to determine the respective value of the second bounding box 110 and the third bounding box 114 respectively.

The device 100 may be configured to provide class-specific prediction intervals.

The multi-dimensional parameter may be associated with a class from a plurality of object classes. According to an example, the device 100 is configured to select the multi-dimensional parameter that is associated with the class predicted for the object, from a plurality of multi-dimensional parameters that define respective prediction intervals and that are associated with a respective class of the plurality of object classes.

According to an example, the device 100 is configured to detect a class of an object from a plurality of object classes of objects. The device 100 is for example configured to predict the class from the plurality of object classes.

In inference, the digital image 108 may be a previously unseen digital image. In training, the digital image 108 may be a digital input image from a data set.

In the data set, the digital input image and a reference bounding box for at least one object depicted in the digital input image is provided and is associated with a class of the object from of the plurality of object classes for objects.

The reference bounding box is defined in the example, in the same way as the bounding boxes that the device 100 is configured to predict.

This reference bounding box in the example identifies a subset of pixels of the digital image as ground truth location of the object.

The reference bounding box is associated with ground truth class for the object from the plurality of object classes.

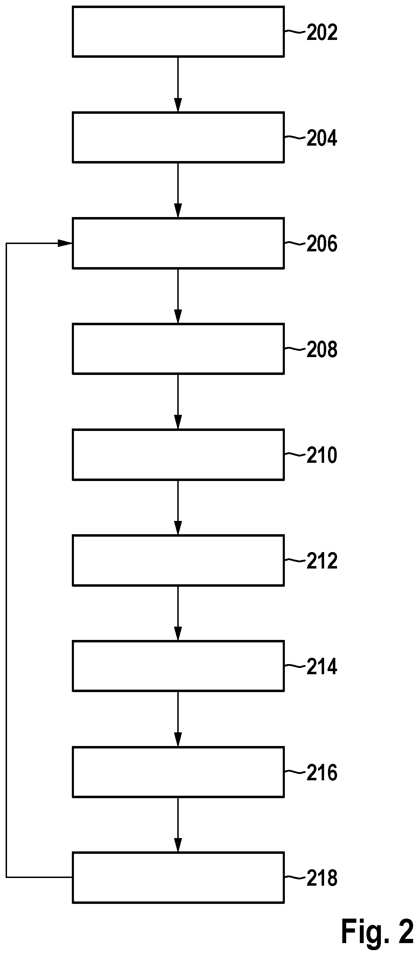

Figure 2 depicts a flow chart comprising steps of a method for providing the quantity prediction system. The method is described by way of example for rectangular digital images and rectangular bounding boxes. The digital images and bounding boxes may have different shapes. The method for providing the quantity prediction system is explained by way of an example of an object detection system, i.e., a quantity prediction system that is configured for predicting a multi-dimensional quantity that characterizes an object in an environment of the technical system 106.

The method equally applies for providing the quantity prediction system for predicting a multi-dimensional quantity that characterizes the technical system 106, in particular that characterizes a physical quantity, or a wear, or an expected lifetime of the technical system 106.

The quantity prediction system comprises a quantity prediction model $\hat{f}$. According to the example, the object detection system comprises an object detection model $\hat{f}$.

The quantity prediction model $\hat{f}$ or the object detection model $\hat{f}$ may be a pretrained neural network model. The quantity prediction model $\hat{f}$ may be configured to receive a physical quantity, or a wear, or an expected lifetime of the technical system 106 as an input and to output mean predictions for the values of the dimensions of the multi-dimensional quantity. The object detection model $\hat{f}$ is for example configured to receive a digital image $x_i$ as input and to output mean predictions for coordinates $u_0$, $v_0$ of a lower left corner and coordinates $u_1$; $v_1$ of an upper right corner of a bounding box, and a class $c_i$ of an object that the bounding box comprises. According to an example, the location of the pixels of the digital image $x_i$ and the location, i.e., the coordinates, of the bounding box in the digital image $x_i$ are identified in a Cartesian coordinate system.

A bounding box is an example for a multi-dimensional quantity. The coordinates $u_0$, $v_0$, $u_1$, $v_1$ are an example of the dimensions of the multi-dimensional quantity.

The bounding boxes may be defined by other means, e.g., by the coordinates of different corners or coordinates of one corner and a length or direction of a diagonal or the length of two sides starting at the corner. The bounding boxes of circular shape may be defined by the coordinates of a center of the circle and a value of a radius or diameter of the circle. The bounding boxes of oval shape may be defined by the coordinates of a center of the oval and a value of a length of a semi-major axis and a semi-minor axis.

The object detection model $\hat{f}$ may be configured to output the respective means.

The quantity prediction model $\hat{f}$ or the object detection model $\hat{f}$ may comprise trained quantile regression heads that are configured to produce quantile predictions.

The method comprises a step 202.

The step 202 may comprise loading a data set $D$ or accessing a preloaded data set $D$. The data set comprises at least one quantity that characterizes the technical system 106, or an environment of the technical system 106 that is associated with a respective ground truth for the multi-dimensional quantity that characterizes an object in an environment of a technical system 106, or a technical system 106.

The step 202 comprises providing an input, in particular a digital input image $x_i$ in particular from the data set D.

According to an example, the method comprises providing different inputs, e.g., digital input images.

In the example, the data set $D$ is split into calibration data $D_{cal} = \{(x_i, Y_i)\}_{i=1,...,n}$ and testing data $D_{test} = \{(x_j, Y_j)\}_{j=n+1,...,n+n_t}$.

The calibration data $D_{cal} = \{(x_i, Y_i)\}_{i=1,...,n}$ comprises $n$ pairs of the at least one quantity and the respective ground truth for the multi-dimensional quantity, e.g., $n$ pairs of a digital image $x_i$ and ground truth instances $Y_i = \{(u_0, v_0, u_1, v_1; c_k)_k\}_i$ for $k$ reference bounding boxes of $k$ objects that are depicted in the digital image $x_i$. The testing data $D_{test} = \{(x_j, y_j)\}_{j=n+1...,n+n_t}$ comprises $n_t$ pairs of the at least one quantity and the respective ground truth for the multi-dimensional quantity, e.g., $n_t$ pairs of a digital image $x_j$ and ground truth instances $Y_j = \{(u_0, v_0, u_1, v_1; c_l)_l\}_j$ for $l$ reference bounding boxes of $l$ objects that are depicted in the digital image $x_j$.

According to the example, the method comprises a class-conditional conformalization for at least one class $c_o$ from a predetermined plurality of object classes $C$. This is described below for an exemplary class $c_o$. Preferably, the class-conditional conformalization is executed as described for the exemplary class $c_o$ for the classes in the predetermined plurality of object classes $C$.

According to an example, the method comprises a class agnostic conformalization. This means, that the multi-dimensional parameter is the same for the classes from the predetermined plurality of object classes $C$.

The method may comprise a step 204.

The step 204 comprises, providing the class $c_o$ of the predetermined plurality of object classes. The class $c_o$ that is processed may be selected randomly or successively from the predetermined plurality of object classes $C$.

The method may comprise a step 206.

The step 206 comprises identifying and collecting the class-associated ground truth instances for inputs $(x_i, Y_i)$ of the calibration data $D_{cal}$ that is associated with the class $c_o$.

The method comprises a step 208.

The step 208 comprises determining, for the ground truth instances of the calibration data $D_{cal}$, with the quantity prediction model $\hat{f}$ a predicted multi-dimensional quantity that characterizes the technical system 106, or an environment of the technical system 106. The predicted multi-dimensional quantity is predicted by the quantity prediction model $\hat{f}$ from the at least one quantity that characterizes the physical quantity, or the wear, or the expected lifetime of the technical system 106.

The step 208 comprises for example determining, for the collected ground truth instances, a predicted bounding

box $\hat{b} = (\hat{u}_0, \hat{v}_0, \hat{u}_1, \hat{v}_1)_{o,i}$ that is predicted by the object detection model $\hat{f}$ from the digital input image $x_i$. This means, the step 208 comprises predicting depending on pixels of the digital input image $x_i$, a predicted bounding box $\hat{b}_o$ that identifies a first set of pixels of the digital input image $x_i$.

Using classes is optional. According to an example, the method uses no classes. This means, that the ground truth instances require no classes and the steps 204 to 208 are not required.

The step 208 comprises providing a plurality of pairs of a predicted multi-dimensional quantity and a reference multi-dimensional quantity, e.g., a predicted bounding box and a reference bounding box $b_o$. This is described below for an exemplary pair $p_o$ of the predicted bounding box $\hat{b}_o$ and the reference bounding box $\hat{b}_o = (u_0, v_0, u_1, v_1)_{o,i}$ for the object of the class $c_o$ in the digital input image $x_i$ from the calibration data $D_{cal}$.

The pair $p_o$ of the predicted bounding box $\hat{b}_o$ and the reference bounding box $\hat{b}_o$ is an example for a pair of a respective predicted multi-dimensional quantity and a respective reference multi-dimensional quantity.

The digital input image $x_i$ may comprise different objects of the same class. The predicted bounding box $\hat{b}$ and the reference bounding box $b$ may be matched to refer to the same object in the digital image $x_i$ using a matching algorithm, e.g., an algorithm that is based on a box intersection-over-union score.

For example, the respective predicted bounding boxes in the plurality of pairs are predicted from the digital input image $x_i$ and matched to the respective reference bounding box.

According to an example, at least a part of the respective predicted bounding boxes in the plurality of pairs are determined from the same digital input image. According to an example, at least a part of the pairs are determined from the different digital input images.

The method comprises a step 210.

The step 210 comprises determining for the dimensions of the multi-dimensional quantity respective sets of scores.

A respective set of scores is associated with a respective dimension.

The scores in a respective set of scores are determined depending on a respective pair.

The score for a dimension of the multi-dimensional quantity that is determined depending on a respective pair indicates how well the dimension of the predicted multi-dimensional quantity of the pair conforms to the same dimension of the reference multi-dimensional quantity of the pair.

The step 210 comprises, for example, determining a score $s_o = s(\hat{b}_o, b_o)$ with a scoring function $s$ that indicates how well a predicted bounding box $\hat{b}_o$ from the pair p, conforms to the reference bounding box $\hat{b}_o$ in the pair p, depending on the pair $p_o$ of bounding boxes.

The step 210 comprises determining the score $s_o$ for a plurality of the pairs $p_o$ of a respective predicted bounding box $\hat{b}_o$ and a respective reference bounding box $\hat{b}_o$ from the calibration data set $D_{cal}$.

The step 210 may comprise determining for the plurality of pairs a respective distance between the predicted multi-dimensional quantity and the reference multi-dimensional quantity in a pair, and determining the score depending on the respective distances that are determined depending on the pair depending on that the score is determined.

The method may comprise determining for the plurality of pairs p, a respective distance between the predicted bounding box and the reference bounding box in a pair, and determining the score depending on the respective distances.

The value of the scoring function $s$ may depend on a distance between the coordinates of the bounding boxes. The scoring function $s$ may be

$$s = \left| \hat{b}_o - b_o \right|$$

The object detection model $\hat{f}$ may comprise a regression head that is configured to predict a standard deviation $\sigma$ of a distribution of the predicted bounding boxes predicted for the reference bounding boxes that are associated with the class $c_o$. depending on the digital input images from the calibration data set $D_{cal}$.

The value of the scoring function $s$ may depend on the distance between the coordinates of the bounding boxes normalized by the standard deviation $\sigma$. The scoring function $s$ may be

$$s = \frac{\left| \hat{b}_o - b_o \right|}{\sigma}$$

The object detection model ¡ may comprise a regression head that is configured to predict a lower conditional quantile $\hat{y}^{qlow}$, e.g., 5%, and an upper conditional quantile $\hat{y}^{qhigh}$, e.g., 95%, depending on the digital input images from the calibration data set $D_{cal}$.

The scoring function $s$ may be

$$s = \max(\hat{y}^{q_{low}} - y, y - \hat{y}^{q_{high}})$$

The method comprises a step 212.

The step 212 comprises determining a respective rank of the scores in the respective set of scores depending on a magnitude of the scores in the respective set of scores, determining for the plurality of pairs, for the respective pairs the largest rank that is associated to the scores that are determined depending on the respective pair.

The method comprises a step 214.

The step 214 comprises determining a cut point for dividing a set of ranks comprising the largest ranks determined for the respective pairs into a first set of ranks and a second set of ranks according to a magnitude of the ranks, wherein the first set of ranks comprises a predetermined quantile of the ranks.

The rank takes into account correlation information between dimensions of the quantity. Using the rank-based information improves the accuracy of the prediction for correlated dimensions.

According to an example, a matrix $S \in \mathbb{R}^{n \times m}$ is determined, that includes the scores s determined for the calibration data set $D_{cal}$.

According to an example, a matrix $R \in \mathbb{R}^{n \times m}$ is determined, that includes respective score ranks. $n$ denotes a number of bounding boxes, $m$ denotes a testing dimension, e.g., coordinates. In the example of four coordinates $u_o$, $u_1$, $v_1$ for the bounding boxes $m = 4$, the Matrix $R$ comprises four columns, wherein the rank of a score within the scores is determined depending on the value of the score, wherein the rank 1 is associated with the lowest score, i.e., the score with the least uncertainty. The other scores are ranked depending on the magnitude of the score, wherein the higher the magnitude, i.e., the uncertainty, the higher the rank. The scores of the different dimensions are ranked separately.

The correction in the example comprises applying max$|\cdot|$ row-wise to the matrix R across the testing dimensions: $\max_{1 \leq l \leq m} |\cdot|$, wherein $l$ indicates the row in the matrix R. This means, the maximum rank $r_q^{max}$ is determined row-wise from the ranks per testing dimension $l \in m$. The row-wise maximum rank $r_n^{max}$ corresponds to a certain magnitude of a selected score of the scores that are assigned in the row to the different testing dimensions.

Determining max$|\cdot|$ over any subset of the testing dimensions is also possible and corresponds to an alternative coverage optimization criterion.

The example comprises determining a conformal quantile across the maximum ranks $r_n^{max}$ of the different bounding boxes to obtain a specific rank $r_q^{max}$ as cut point of the maximum ranks $r_n^{max}$. For example, the cut point for a predetermined quantile, e.g., a 90% quantile is determined. The specific rank $r_q^{max}$ is associated with a specific score.

The method comprises a step 216.

The quantile is for example defined depending on the amount $n$ of digital images in the calibration data set $D_{cal}$ as

$$\frac{(n+1)(1-\alpha)}{n}$$

wherein $0 < \alpha < 1$ is a miscoverage threshold, e.g., a selectable or learnable parameter. The threshold $\alpha$ may be 0.1 for a 90% quantile in the first set of scores or 0.05 for a 95% quantile in the first set of scores.

The first set of ranks for example comprises a 90% or a 95% quantile of the scores.

The step 216 comprises determining a respective cut point $\hat{q}$ for dividing a respective set of scores.

In the example, the score in a respective set of scores that has the rank $r_q^{max}$ is used as cut point $\hat{q}$ for the respective set of scores. This means, the cut point $\hat{q}$ for dividing the respective set of scores is the score in the respective set of scores that has the rank that matches the cut point for dividing the set of ranks.

The cut point $\hat{q}$ for the respective set of scores divides the respective set of scores into a first set of scores and a second set of scores, according to a magnitude of the scores, wherein the first set of scores comprises a predetermined quantile of the scores.

According to an example, the higher the score is, the higher is the uncertainty. The first set of scores comprises for example the scores that indicate a lower uncertainty than the second set of scores.

The quantity prediction model or the object detection model ¡ may comprise a regression head, that is configured to predict the cut point $\hat{q}$ for the quantile depending on the inputs, e.g., depending on the digital input images from the calibration data set $D_{cal}$.

An exemplary algorithm for determining the scores is based on a score matrix $S = (s_{1,},,. s_n) = [s_{ik}] \in R^{n \times m}$ and a rank matrix $R = (r_{1,},,. r_n) = [r_{ik}] \in N^{n \times m}$ wherein $1 \leq i < \_n, 1 \leq k \leq m$.

1: Input: Score matrix S, rank matrix R
2: Output: Coordinate-wise quantiles $\hat{q}^k \forall k \in [m]$
3: Procedure:
4: Apply $\|\cdot\|_\infty$ row-wise to R

$$r^{max} = (\|r_1\|_\infty, ..., \|r_n\|_\infty) = \left( \max_{1 \leq k \leq m} |r_{1k}|, ..., \max_{1 \leq k \leq m} |r_{nk}| \right) \in N^n$$

5: Sort $r^{max}$ in ascending order (sort) and select $r_t^{max}$ as the rank at index $t = q(1 - \alpha; r^{max})$ to ensure minimum desired coverage.

6: Sort S column-wise such that $\forall k \in [m]: s_1^k < \cdots < s_n^k$

7: Select for each column in S the score at rank $r_t^{max}$ as conformal quantile, i.e., $\forall k \in [m]: \hat{q}^k s_{r_t}^{k_{max}}$

8: End procedure

The method comprises a step 218.

The step 218 comprises determining a multi-dimensional parameter depending on the scores. The multi-dimensional parameter may be associated with the class.

The step 218 comprises determining for at least one dimension of the multi-dimensional quantity, a value of the multi-dimensional parameter in the dimension of the multi-dimensional parameter that corresponds to the dimension of the multi-dimensional quantity depending on a magnitude of the cut point for dividing the set of scores that comprises the scores for the respective at least one dimension.

This means, the value of the multi-dimensional parameter in a dimension is determined depending on the respective cut points $\hat{q}$ for dividing the respective set of scores that is determined for the dimension.

The step 218 may comprise determining, for a respective class in the plurality of object classes, the multi-dimensional parameter that is associated with the respective class depending on the pairs that are associated with the respective class.

The steps 206 to 218 may be executed in particular repeatedly for another class $c_o$ from the plurality of object classes $C$. Preferably, the steps 206 to 218 are executed for the classes in the plurality of object classes $C$.

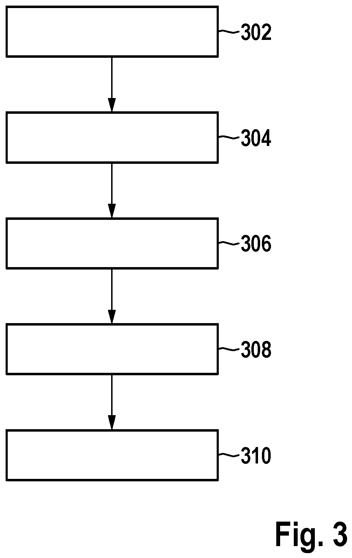

Figure 3 depicts a flow chart comprising steps of a method for predicting a multi-dimensional quantity that characterizes an object in an environment of a technical system 106, or a technical system 106, in particular that characterizes a physical quantity, or a wear, or an expected lifetime of the technical system 106, in particular for determining the location of the object in the digital image 108. The method for determining the location of the object is described for an exemplary class from the plurality of object classes. The method may be applied to determine the location of objects of other classes in the same way as described for the exemplary class. Using the classes is optional. The method for determining the location of the object is describe for an exemplary object. The digital image 108 may comprise more than one object. The method is applied to the other objects in the digital image as described for the exemplary object.

The method for predicting a multi-dimensional quantity comprises a step 302.

The step 302 comprises providing the at least one quantity that characterizes the technical system 106 or the environment of the technical system 106, e.g., the digital image 108. The at least one quantity, e.g., the digital image 108, is for example captured with the sensor 116.

Afterwards a step 304 is executed.

In step 304, a first prediction of the multi-dimensional quantity, e.g., the first bounding box 110, is predicted depending on pixels of the digital image 108.

Predicting the first bounding box 110 comprises for example determining a value in a dimension of the first bounding box 110 that distinguishes the pixels in the first set of pixels from other pixels of the digital image by a position of the respective pixel in the digital image 108.

In the example, the coordinates of the lower left pixel and the upper right pixel of the first bounding box 110 are predicted.

Afterwards an optional step 306 is executed, in case the classes are used.

In step 306, a class of the predetermined plurality of object classes is predicted for the first bounding box 110 depending on at least a part of the pixels of the digital image 108.

Afterwards a step 308 is executed.

In step 308, the multi-dimensional parameter for determining a second prediction of the multi-dimensional quantity, e.g., the second bounding box 112 and/or the third bounding box 114, is provided with the method for providing the quantity prediction system, in particular the object detection system.

In the example, the multi-dimensional parameter that is associated with the class is provided from a plurality of multi-dimensional parameters that are associated with a respective class of the plurality of object classes.

The plurality of multi-dimensional parameters that are associated with a respective class of the plurality of object classes is determined for example with the method for providing the quantity prediction system, in particular the object detection system.

Afterwards a step 310 is executed.

The step 310 comprises determining the second prediction of the multi-dimensional quantity.

Determining the second prediction of the multi-dimensional quantity comprises determining values of the second prediction of the multi-dimensional quantity in the dimensions of the second prediction of the multi-dimensional quantity. A value in a specific dimension of the second prediction of the multi-dimensional quantity is determined depending on a value of a specific dimension of the multi-dimensional parameter that corresponds to the specific dimension of the second prediction of the multi-dimensional quantity that is determined. Determining the value in the specific dimension of the second prediction of the multi-dimensional quantity comprises adding or subtracting the value of the multi-dimensional parameter in the specific dimension to the value in a specific dimension of the first prediction of the multi-dimensional quantity that corresponds to the specific dimension of the multi-dimensional parameter and the second prediction of the multi-dimensional quantity.

In step 310, for example, the second bounding box 112 is determined depending on the first bounding box 110 and the multi-dimensional parameter.

Determining the second bounding box 112 may comprises for the dimensions of the second bounding box 112, determining a value in a dimension of the second bounding box 112 that distinguishes the pixels in the second set of pixels from other pixels of the digital image 108 by a position of the respective pixel in the digital image 108.

Determining the value in the dimension of the second bounding box 112 may comprise adding or subtracting the value of the multi-dimensional parameter to the value in the dimension of the first bounding box 110.

According to the example, determining the second bounding box 112 comprises expanding the first bounding box 110 depending on the multi-dimensional parameter.

In the example, the coordinates of the lower left pixel of the second bounding box 112 are determined by subtracting the value of the multi-dimensional parameter from the coordinates of the lower left pixel of the first bounding box 110. In the example, the coordinates of the upper right pixel of the second bounding box 112 are determined by adding the parameter to the coordinates of the upper right pixel of the first bounding box 110.

In step 310, the third bounding box 114 may be determined depending on the first bounding box 110 and the multi-dimensional parameter. Determining the value in the dimension of the third bounding box 114 may comprise adding or subtracting the value of the multi-dimensional parameter to the value in the dimension of the first bounding box 110. According to the example, determining the third bounding box 114 comprises shrinking the first bounding box 100 depending on the parameter.

In the example, the coordinates of the lower left pixel of the third bounding box 114 are determined by adding the value of the multi-dimensional parameter to the coordinates of the lower left pixel of the first bounding box 110. In the example, the coordinates of the upper right pixel of the third bounding box are determined by subtracting the value of the multi-dimensional parameter from the coordinates of the upper right pixel of the first bounding box 110.

According to an example, both, the second bounding box 112 and the third bounding box 114 are determined with the same multi-dimensional parameter.

According to an example, the second bounding box 112 and the third bounding box 114 are determined with different multi-dimensional parameters.

The plurality of multi-dimensional parameters that are associated with a respective class of the plurality of object classes may comprise a pair of multi-dimensional parameters that are associated with the class, wherein one multi-dimensional parameter is provided for determining the second bounding box 112 and the other parameter of the pair is provided for determining the third bounding box 114.

The second bounding box 112 determines a first location of the object.

The third bounding box 114 determines a second location of the object.

The true location of the object is between the second bounding box 112, i.e., the first location, and the third bounding box 114, i.e., the second location. This is guaranteed for any correctly classified object with a marginal likelihood provided by the quantile.

The predetermined plurality of object classes may comprise classes such as "person", "vehicle", "road", "infrastructure", "animal". This may be used in case the technical system 106 is for autonomous moving a vehicle. The predetermined plurality of object classes may comprise classes such as "solid", "fragile". This may be used in case the technical system 106 is a robot.

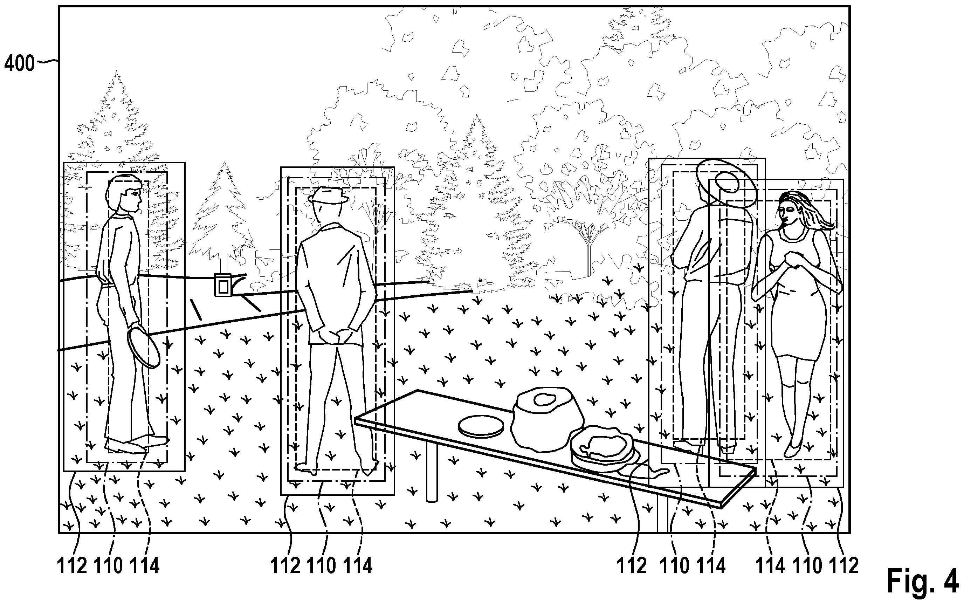

Figure 4 schematically depicts a result of determining the location of objects in a digital image 400. In the example, four objects of the same class "person" are recognized. The respective first bounding box 110, second bounding box 112 and third bounding box 114 are depicted in Figure 4 per object.

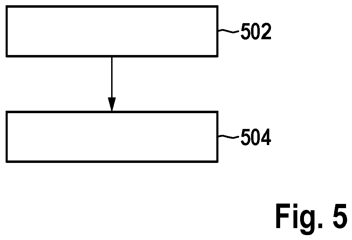

Figure 5 depicts a flow chart comprising steps of a method for operating the technical system 106.

The method for operating the technical system 106 comprises a step 502.

The step 502 comprises determining the multi-dimensional quantity with the method described above.

For example, the value in the dimension of the first prediction of the multi-dimensional quantity is determined and the value of the multi-dimensional parameter in the dimension that corresponds to the dimension of the first prediction of the multi-dimensional quantity is added to the value in the dimension of the first prediction of the multi-dimensional quantity that corresponds to the dimension to define a first boundary.

For example, the value in the dimension of the first prediction of the multi-dimensional quantity is determined and the value of the multi-dimensional parameter in the dimension that corresponds to the dimension of the first prediction of the multi-dimensional quantity is subtracted from the value in the dimension of the first prediction of the multi-dimensional quantity that corresponds to the dimension to define a second boundary.

The step 502 comprises determining a location of an object in the digital image with the method described above.

Afterwards a step 504 is executed.

The step 504 comprises operating the at least a part of the technical system 106 depending on the multi-dimensional quantity within the first boundary, within the second boundary or within both boundaries

The step 504 for example comprises operating the technical system 106 depending on the location of the object determined by the second bounding box 112 and/or the third bounding box 114.

Operating the technical system 106 for example comprises granting access, conveying information about the multi-dimensional quantity, e.g., the object, or conveying information about the multi-dimensional quantity, e.g., the location, or stopping, or operating the technical system 106 in a safe mode upon detecting that the multi-dimensional quantity, e.g., the location, is within, or outside of a predetermined area, or moving at least a part of the technical system 106 depending on the multi-dimensional quantity, in particular to the location or to avoid the location of the object.

The method may comprise determining the value in the dimension of the second prediction of the multi-dimensional quantity, e.g., of the second bounding box 112, and adding the value of the multi-dimensional parameter to the value in the dimension of the first prediction of the multi-dimensional quantity, e.g., the first bounding box 110 and use the second prediction of the multi-dimensional quantity, e.g. the second bounding box 112, to move the at least a part of the technical system 106 depending on the multi-dimensional quantity, e.g., as location of the object to move the at least a part of the technical system 106 to avoid the location of the object. The location in this case may be a traffic participant or infrastructure and the technical system 106 may be a vehicle that is moved to avoid a collision with the traffic participant or infrastructure.

The method may comprise determining the value in the dimension of the third bounding box 114, and subtracting the value of the multi-dimensional parameter from the value in the dimension of the first bounding box 110, and use the third bounding box 114 as location of the object to move the at least a part of the technical system 106 to the location. The location in this case may be a parking spot and the technical system 106 may be a vehicle that is moved into the parking spot.

The multi-dimensional parameter may be provided depending on a plurality of pairs of a respective predicted multi-dimensional quantity and a respective reference multi-dimensional quantity with the following steps:
Determining for the dimensions of the multi-dimensional quantity respective sets of scores. A respective set of scores is associated with a respective dimension. The scores in a respective set of scores are determined depending on a respective pair of the plurality of pairs. The score for a dimension of the multi-dimensional quantity that is determined depending on a respective pair indicates how well the dimension of the predicted multi-dimensional quantity of the pair conforms to the same dimension of the reference multi-dimensional quantity of the pair.

Determining a respective rank of the scores in the respective set of scores depending on a magnitude of the scores in the respective set of scores.

Determining, for the respective pairs of the plurality of pairs, a respective largest rank that is associated to the scores that are determined depending on the respective pair.

Determining a cut point for dividing a set of ranks comprising the largest ranks into a first set of ranks and a second set of ranks according to a magnitude of the ranks.

The first set of ranks comprises the predetermined quantile of the ranks.

Determining, for the dimensions of the multi-dimensional quantity, a respective cut point for dividing the respective set of scores into a first set of scores and a second set of scores according to a magnitude of the scores.

The first set of scores comprises a quantile of the scores that is defined by the cut point for dividing the respective set of scores.

Determining the cut point for dividing the respective set of scores to be the score in the respective set of scores that has the rank that matches the cut point for dividing the set of ranks.

Determining for the respective dimensions of the multi-dimensional quantity, a value of the parameter in the respective dimension of the multi-dimensional parameter that corresponds to the dimension of the multi-dimensional quantity depending on a magnitude of the cut point for dividing the set of scores that is associated with the respective dimension.

The physical quantity in this context may refer to a temperature, an acceleration, a velocity, a revolution per minute, a electrical tension or current, or a force, or a torque at at least a part of the technical system 106, in particular of a drive or a gear box, or an energy source, e.g., a battery. The wear or expected lifetime in this context may refer to the wear or expected lifetime of at at least a part of the technical system 106, in particular of the drive or the gear box, or the energy source, e.g., the battery.

The physical quantity in this context may refer to a characteristic of a material, e.g., a thickness or stiffness or geometry, of the technical system 106, in particual of a component of the technical system 106. The wear or expected lifetime in this context may refer to the wear or expected lifetime of the component.

**Claims**

1. Computer-implemented method for determining a multi-dimensional quantity that characterizes an object in an environment of a technical system (106), or a technical system (106), **characterized in that** the method comprises providing (302) at least one quantity that characterizes the technical system (106), or an environment of the technical system (106), predicting (304), depending on the at least one quantity, a first prediction of the multi-dimensional quantity, providing (308) a multi-dimensional parameter that defines a prediction interval, determining (310) a second prediction of the multi-dimensional quantity depending on the first prediction of the multi-dimensional quantity and the multi-dimensional parameter, wherein the second multi-dimensional prediction determines the multi-dimensional quantity, wherein providing (308) the multi-dimensional parameter, comprises providing (208) a plurality of pairs of a prediction of the multi-dimensional quantity and a reference for the multi-dimensional quantity, providing (210) a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair at least in the dimension that the score is associated with, wherein the plurality of scores comprises sets of scores, wherein the scores in the set of scores are associated with the same dimension, determining (212), depending on the magnitude of the scores in the plurality of scores, a plurality of ranks for the scores that are associated with a dimension of the multi-dimensional quantity and a pair of the plurality of pairs respectively, selecting (214) a rank of a set of ranks, wherein the set of ranks comprises ranks, in particular the largest ranks, that are associated in the plurality of ranks to different dimensions of the multidimensional quantity, selecting (216) a score of the set of scores depending on the selected rank, and determining (218) a value of the multi-dimensional parameter in the same dimension depending on the selected score.

2. The method according to claim 1, **characterized in that** selecting (214) the rank comprises determining (214) a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting (216) the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected.

3. The method according to one of the preceding claims, **characterized in that** the method comprises determining for the plurality of pairs a respective distance between the predicted multi-dimensional quantity and the reference multi-dimensional quantity in a pair, and determining (210) the scores depending on the respective distances.

4. The method according to one of the preceding claims, **characterized in that** determining (310) the second prediction of the multi-dimensional quantity comprises determining a value in a dimension of the second prediction of the multi-dimensional quantity, wherein determining the value in the dimension of the second prediction of the multi-dimensional quantity comprises adding or subtracting a value of the parameter in the dimension to the value in a dimension of the first prediction of the multi-dimensional quantity that corresponds to the dimension of the parameter and the second prediction of the multi-dimensional quantity.

5. The method according to one of the preceding claims, **characterized in that** the multi-dimensional quantity and the reference for the multi-dimensional quantity characterizes the object in the environment of the technical system (106), or the technical system (106), in particular a physical quantity, or a wear, or an expected lifetime of the technical system (106),

6. Computer-implemented method for operating a technical system (106), in particular a computer-controlled machine, preferably a robot, a vehicle, a domestic appliance, a power tool, a manufacturing machine, a personal assistant, an access control system, or a system for conveying information, in particular a surveillance system, or a medical imaging system, **characterized in that** the method comprises determining (502) a multi-dimensional quantity that characterizes a technical system, in particular that characterizes a physical quantity, or a wear, or an expected lifetime of the technical system, with the method according to one of the previous claims, and operating (504) the technical system (106) depending on the multi-dimensional quantity determined by the second multi-dimensional prediction, in particular granting access, conveying information about the system, or conveying information about the multi-dimensional quantity, or stopping, or operating the technical system (106) in a safe mode upon detecting that the multi-dimensional quantity is within, or outside of a predetermined tolerance, or moving at least a part of the technical system (106) depending on the multi-dimensional quantity.

7. The method according to claim 6, **characterized in that** the method comprises determining (502) the value in the dimension of the first prediction of the multi-dimensional quantity and adding the value of the parameter in the dimension that corresponds to the dimension of the second multi-dimensional prediction to the value in the dimension of the first prediction of the multi-dimensional quantity that corresponds to the dimension to define a first boundary and/or subtracting the parameter from the value in the dimension of the first multi-dimensional prediction to define a second boundary, and operating (504) the at least a part of the technical system (106) within the first boundary, within the second boundary or within both boundaries.

8. Computer-implemented method for providing an quantity prediction system for predicting a multi-dimensional quantity that characterizes an object in an environment of a technical system (106), or a technical system (106), in particular that characterizes a physical quantity, or a wear, or an expected lifetime of the technical system (106), **characterized in that** the method comprises providing (208) a plurality of pairs of a prediction of the multi-dimensional quantity and a reference for the multi-dimensional quantity, providing (210) a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair at least in the dimension that the score is associated with, wherein the plurality of scores comprises sets of scores, wherein the scores in the set of scores are associated with the same dimension, determining (212), depending on the magnitude of the scores in the plurality of scores, a plurality of ranks for the scores that are associated with a dimension of the multi-dimensional quantity and a pair of the plurality of pairs respectively, selecting (214) a rank of a set of ranks, wherein the set of ranks comprises ranks, in particular the largest ranks, that are associated in the plurality of ranks to different dimensions of the multidimensional quantity, selecting (216) a score of the set of scores depending on the selected rank, and determining (218) a value of a multi-dimensional parameter that defines a prediction interval of the quantity prediction system in the same dimension depending on the selected score, and providing the quantity prediction system with the multi-dimensional parameter.

9. The method according to claim 8, **characterized in that** selecting (214) the rank comprises determining (214) a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting (216) the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected.

10. The method according to claim 8 or 9, **characterized in that** the method comprises determining for the plurality of pairs a respective distance between the predicted multi-dimensional quantity and the reference multi-dimensional quantity in a pair, and determining (210) the scores depending on the respective distances.

11. Device (100), **characterized in that** the device (100) comprises at least one processor (102) and at least one memory (104), wherein the at least one processor (102) is configured to execute instructions that, when executed by the at least one processor (102), cause the device (100) to perform the method according to one of the previous claims, wherein the at least one memory (104) is configured to store the instructions.

**12.** Computer program, **characterized in that** the computer program comprises computer-readable instructions that, when executed by a computer, cause the computer to execute the method according to one of the claims 1 to 10.

**Amended claims in accordance with Rule 137(2) EPC.**

**1.** Computer-implemented method for determining a multi-dimensional quantity that characterizes an object in an environment of a technical system (106), or a technical system (106), **characterized in that** the method comprises providing (302) at least one quantity that characterizes the technical system (106), or an environment of the technical system (106), predicting (304), depending on the at least one quantity, a first prediction of the multi-dimensional quantity, providing (308) a multi-dimensional parameter that defines a prediction interval, determining (310) a second prediction of the multi-dimensional quantity depending on the first prediction of the multi-dimensional quantity and the multi-dimensional parameter, wherein the second multi-dimensional prediction determines the multi-dimensional quantity, wherein providing (308) the multi-dimensional parameter, comprises providing (208) a plurality of pairs of a prediction of the multi-dimensional quantity and a reference for the multi-dimensional quantity, providing (210) a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair in the dimension that the score is associated with, wherein the plurality of scores comprises sets of scores, wherein the scores in the set of scores are associated with the same dimension, determining (212), depending on the magnitude of the scores in the plurality of scores, a plurality of ranks for the scores that are associated with a dimension of the multi-dimensional quantity and a pair of the plurality of pairs respectively, selecting (214) a rank of a set of ranks, wherein the set of ranks comprises ranks, in particular the largest ranks, that are associated in the plurality of ranks to different dimensions of the multidimensional quantity, selecting (216) a score of the set of scores depending on the selected rank, and determining (218) a value of the multi-dimensional parameter in the same dimension depending on the selected score.

**2.** The method according to claim 1, **characterized in that** selecting (214) the rank comprises determining (214) a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting (216) the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected.

**3.** The method according to one of the preceding claims, **characterized in that** the method comprises determining for the plurality of pairs a respective distance between the predicted multi-dimensional quantity and the reference multi-dimensional quantity in a pair, and determining (210) the scores depending on the respective distances.

**4.** The method according to one of the preceding claims, **characterized in that** determining (310) the second prediction of the multi-dimensional quantity comprises determining a value in a dimension of the second prediction of the multi-dimensional quantity, wherein determining the value in the dimension of the second prediction of the multi-dimensional quantity comprises adding or subtracting a value of the parameter in the dimension to the value in a dimension of the first prediction of the multi-dimensional quantity that corresponds to the dimension of the parameter and the second prediction of the multi-dimensional quantity.

**5.** The method according to one of the preceding claims, **characterized in that** the multi-dimensional quantity and the reference for the multi-dimensional quantity characterizes the object in the environment of the technical system (106), or the technical system (106), in particular a physical quantity, or a wear, or an expected lifetime of the technical system (106),

**6.** Computer-implemented method for operating a technical system (106), in particular a computer-controlled machine, preferably a robot, a vehicle, a domestic appliance, a power tool, a manufacturing machine, a personal assistant, an access control system, or a system for conveying information, in particular a surveillance system, or a medical imaging system, **characterized in that** the method comprises determining (502) a multi-dimensional quantity that characterizes a technical system, in particular that characterizes a physical quantity, or a wear, or an expected lifetime of the technical system, with the method according to one of the previous claims, and operating (504) the technical system (106) depending on the multi-dimensional quantity determined by the second multi-dimensional prediction, in particular granting access, conveying information about the system, or conveying information about the multi-dimensional quantity, or stopping, or operating the technical system (106) in a safe mode upon detecting that the multi-dimensional quantity is within, or outside of a predetermined tolerance, or moving at least a part of the technical system (106) depending on the multi-dimensional quantity.

7. The method according to claim 6, **characterized in that** the method comprises determining (502) the value in the dimension of the first prediction of the multi-dimensional quantity and adding the value of the parameter in the dimension that corresponds to the dimension of the second multi-dimensional prediction to the value in the dimension of the first prediction of the multi-dimensional quantity that corresponds to the dimension to define a first boundary and/or subtracting the parameter from the value in the dimension of the first multi-dimensional prediction to define a second boundary, and operating (504) the at least a part of the technical system (106) within the first boundary, within the second boundary or within both boundaries.

8. Computer-implemented method for providing an quantity prediction system for predicting a multi-dimensional quantity that characterizes an object in an environment of a technical system (106), or a technical system (106), in particular that characterizes a physical quantity, or a wear, or an expected lifetime of the technical system (106), **characterized in that** the method comprises providing (208) a plurality of pairs of a prediction of the multi-dimensional quantity and a reference for the multi-dimensional quantity, providing (210) a plurality of scores that are associated with a dimension of the multi-dimensional quantity and a pair of the plurality of pairs respectively, wherein the score that is associated with a dimension of the multi-dimensional quantity indicates how well the predicted multi-dimensional quantity of the pair conforms to the reference multi-dimensional quantity of the pair in the dimension that the score is associated with, wherein the plurality of scores comprises sets of scores, wherein the scores in the set of scores are associated with the same dimension, determining (212), depending on the magnitude of the scores in the plurality of scores, a plurality of ranks for the scores that are associated with a dimension of the multi-dimensional quantity and a pair of the plurality of pairs respectively, selecting (214) a rank of a set of ranks, wherein the set of ranks comprises ranks, in particular the largest ranks, that are associated in the plurality of ranks to different dimensions of the multidimensional quantity, selecting (216) a score of the set of scores depending on the selected rank, and determining (218) a value of a multi-dimensional parameter that defines a prediction interval of the quantity prediction system in the same dimension depending on the selected score, and providing the quantity prediction system with the multi-dimensional parameter.

9. The method according to claim 8, **characterized in that** selecting (214) the rank comprises determining (214) a cut point for dividing the set of ranks into a first set of ranks and a second set of ranks according to a magnitude of the ranks, wherein the first set of ranks comprises a predetermined quantile of the ranks, wherein the cut point defines the selected rank, and/or wherein selecting (216) the score comprises determining a cut point for dividing the set of scores into a first set of scores and a second set of scores according to a magnitude of the scores, wherein the first set of scores comprises a predetermined quantile of the scores, wherein the cut point for dividing the respective set of scores is the score in the respective set of scores that has the selected.

10. The method according to claim 8 or 9, **characterized in that** the method comprises determining for the plurality of pairs a respective distance between the predicted multi-dimensional quantity and the reference multi-dimensional quantity in a pair, and determining (210) the scores depending on the respective distances.

11. Device (100), **characterized in that** the device (100) comprises at least one processor (102) and at least one memory (104), wherein the at least one processor (102) is configured to execute instructions that, when executed by the at least one processor (102), cause the device (100) to perform the method according to one of the previous claims, wherein the at least one memory (104) is configured to store the instructions.

12. Computer program, **characterized in that** the computer program comprises computer-readable instructions that, when executed by a computer, cause the computer to execute the method according to one of the claims 1 to 10.

Fig. 1

**Fig. 2**

302

304

306

308

310

Fig. 3

EP 4 530 943 A1

400

112 110 114      112 110 114      112 110 114   114 110 112

**Fig. 4**

Fig. 5

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/318559 A1 (SHEN YICHUN [CN] ET AL) 6 October 2022 (2022-10-06) * paragraphs [0115], [0005], [0200], [0077]; figures 1-5 * | 1-12 | INV. G06Q10/04 G06N20/00 G06V10/70 |
| Y | US 2019/258878 A1 (KOIVISTO TOMMI [FI] ET AL) 22 August 2019 (2019-08-22) * paragraph [0041]; figures 2a,2b,7 * | 1-12 | |
| Y | US 2019/258251 A1 (DITTY MICHAEL ALAN [US] ET AL) 22 August 2019 (2019-08-22) * paragraphs [0021], [0657] – [0661]; figure 64 * | 1-12 | |

TECHNICAL FIELDS
SEARCHED        (IPC)

G06Q
G06V
G06N

The present search report has been drawn up for all claims

| Place of search | Date of completion of the search | Examiner |
|---|---|---|
| Munich | 21 March 2024 | Kerschbaumer, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 0196

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | | Publication date | Patent family member(s) | | | Publication date |
|---|---|---|---|---|---|---|---|
| US 2022318559 | A1 | | 06-10-2022 | CN | 115812222 | A | 17-03-2023 |
| | | | | DE | 112021007439 | T5 | 25-01-2024 |
| | | | | GB | 2610457 | A | 08-03-2023 |
| | | | | US | 2022318559 | A1 | 06-10-2022 |
| | | | | WO | 2022205138 | A1 | 06-10-2022 |
| US 2019258878 | A1 | | 22-08-2019 | CN | 111133447 | A | 08-05-2020 |
| | | | | DE | 112019000049 | T5 | 23-01-2020 |
| | | | | US | 2019258878 | A1 | 22-08-2019 |
| | | | | US | 2022101635 | A1 | 31-03-2022 |
| | | | | WO | 2019161300 | A1 | 22-08-2019 |
| US 2019258251 | A1 | | 22-08-2019 | CN | 111587407 | A | 25-08-2020 |
| | | | | EP | 3707572 | A1 | 16-09-2020 |
| | | | | JP | 7346401 | B2 | 19-09-2023 |
| | | | | JP | 2021508863 | A | 11-03-2021 |
| | | | | US | 2019258251 | A1 | 22-08-2019 |
| | | | | US | 2023176577 | A1 | 08-06-2023 |
| | | | | US | 2024045426 | A1 | 08-02-2024 |
| | | | | WO | 2019094843 | A1 | 16-05-2019 |

EPO FORM P0459

For more details about this annex : see Official Journal of the European Patent Office, No. 12/82